# EUROPEAN PATENT APPLICATION

(11) **EP 3 487 148 A1**
(43) Date of publication of application: **22.05.2019**
(21) Application number: 17827026.0
(22) Date of filing: 14.07.2017
(51) Int. Cl.: H04L 29/08

(54) **VIDEO CONFERENCE IMPLEMENTATION METHOD, APPARATUS AND SYSTEM, AND CLOUD DESKTOP TERMINAL**

(30) Priority: 15.07.2016 CN 201610560557
(71) Applicant: ZTE Corporation, Shenzhen, Guangdong 518057 (CN)
(72) Inventor: CAO, Ying, Shenzhen Guangdong 518057 (CN)
(74) Representative: Lavoix
(86) International application number: PCT/CN2017/092918
(87) International publication number: WO 2018/010690

(57) **Abstract**

Provided are a video conference implementation method, apparatus and system, and a cloud desktop terminal, the method comprising: establishing a media channel between a cloud desktop terminal and a conference server; the cloud desktop terminal receiving media data transmitted by the conference server by means of the media channel; and the cloud desktop terminal carrying out a video conference according to the media data. Using said technical solution solves the problem in relevant technology wherein video conference put immense pressure on a network in an environment of a cloud desktop, which is due to interaction of a large quantity of media data between a cloud desktop terminal and a cloud desktop virtual machine. The technical solution thereby significantly reduces reliance on network conditions and reduces the load of the cloud desktop virtual machine.

## Description

### TECHNICAL FIELD

The disclosure relates to the field of communications, and particularly to a method, apparatus and system for implementing a video conference and a cloud desktop terminal.

### BACKGROUND

Cloud Desktop as a new application mode is increasingly used for institutions such as enterprise, government, education department due to its properties, such as, high security, low terminal investment cost, flexible deployment and fast delivery speed. Meanwhile, accessing modes of the cloud desktop becomes more flexible. The cloud desktop supports access of various terminals, such as, a PC, a thin terminal, a mobile phone, a tablet or the like, and is compatible with Window/Linux operating system.

Another kind of media communication application, video conferencing, which has already been popularized, has penetrated into all aspects of life and work. In order to use the traditional video conferencing system in the cloud desktop environment, since the media collection, display and control terminals are respectively deployed in the terminal and the virtual machine, a large amount of media data transmission is inevitable in the communication process, which brings great pressure to the network.

There is another popularized long-widespread media communication application-video conference, which has been penetrated into every aspect of life and work. However, if a traditional video conferencing system is to be used in a cloud desktop environment, due to the fact that media collection, display and control ends are deployed on terminals and virtual machines respectively, a large amount of media data transmission is inevitable in the communication process, which brings enormous pressures on the network.

In the related art, due to interaction of a large amount of media data between a cloud desktop terminal and a cloud desktop virtual machine, execution of the video conference in cloud desktop environment would bring enormous pressures on the network, but an effective approach has not been proposed yet.

### SUMMARY

Embodiments of the disclosure provide a method, an apparatus and a system for implementing a video conference and a cloud desktop terminal, so as to at least solve the problem in the related art that execution of the video conference in cloud desktop environment brings enormous pressures on the network due to interaction of a large amount of media data between the cloud desktop terminal and a cloud desktop virtual machine.

An embodiment of the disclosure provides a system for implementing a video conference, which includes a cloud desktop terminal and a conference server. The cloud desktop terminal is configured with a terminal proxy module, and the terminal proxy module is configured to establish a media channel with the conference server. The conference server is connected with the cloud desktop terminal and configured to send media data required for the video conference to the terminal proxy module through the established media channel.

In an example, the system may further include a cloud desktop virtual machine, and the cloud desktop terminal may be configured with a media display module thereon.

The cloud desktop virtual machine may be connected with the conference server and the cloud desktop terminal, and may be configured to receive control information from the conference server and send the control information to the media display module via a pre-established link. The control information may be configured for controlling presentation of the video conference, and the link may be pre-established by a cloud end proxy module in the cloud desktop virtual machine and the terminal proxy module.

In an example, the cloud desktop virtual machine may be configured with the cloud end proxy module and configured to forward the control information to the media display module.

In an example, the cloud desktop virtual machine may be further configured to establish a signalling channel with the conference server, and receive the control information for controlling the video conference from the conference server through the signalling channel.

Another embodiment of the disclosure provides a cloud desktop terminal, which includes a terminal proxy module.

The terminal proxy module may be configured to establish a media channel with a conference server and receive media data required for the video conference from the conference server through the media channel.

In an example, the cloud desktop terminal may further include a media display module. The media display module may be configured to receive, via a pre-established link, control information sent by the conference server and forwarded by the cloud desktop virtual machine, wherein the link is pre-established by a cloud end proxy module in the cloud desktop virtual machine and the terminal proxy module.

An embodiment of the disclosure provides a method for implementing a video conference, which may include the following operations.

A cloud desktop terminal establishes a media channel with a conference server. The cloud desktop terminal receives media data sent by the conference server through the media channel. The cloud desktop terminal executes the video conference according to the media data.

In an example, the method may further include the operations.

The cloud desktop terminal receives control information sent by the cloud desktop virtual machine via a pre-established link.

The cloud desktop terminal controls presentation of the video conference according to the control information.

In an example, the operation that the cloud desktop terminal receives the control information sent by the cloud desktop virtual machine via the pre-established link may include the following action.

The cloud desktop terminal may receive the control information via the link established by a terminal proxy module and a cloud end proxy module, wherein the terminal proxy module may be arranged in the cloud desktop terminal and the cloud end proxy module may be arranged in the cloud desktop virtual machine.

In an example, the cloud desktop terminal may establish the link with the cloud desktop virtual machine in at least one of the following manners.

The cloud desktop terminal may receive notification information from the cloud desktop virtual machine upon activating a video conference application of the cloud desktop virtual machine.

The cloud desktop terminal may read a pre-stored Internet IP address of the cloud desktop virtual machine under triggering of the notification information, and initiate a link request to a cloud desktop virtual machine corresponding to the IP address.

In an example, the operation that the cloud desktop terminal initiates the link request to the cloud desktop virtual machine corresponding to the IP address may include the following action.

The cloud desktop terminal may initiate the link request to the cloud desktop virtual machine corresponding to the IP address through a terminal proxy module in the cloud desktop terminal.

In an example, the operation that the cloud desktop terminal establishes the media channel with the conference server may include the following actions.

The cloud desktop terminal may receive a conference server address from a cloud desktop virtual machine.

The cloud desktop terminal may establish the media channel with the conference server according to the conference server address.

Another embodiment of the disclosure further provides a method for implementing a video conference, which may include the following operations.

A conference server establishes a media channel with a cloud desktop terminal.

The conference server sends media data required for the video conference to the cloud desktop terminal through the media channel.

In an example, the method may further include the following operations.

The conference server may establish a signalling channel with a cloud desktop virtual machine.

The conference server may send control information for controlling the video conference to the cloud desktop virtual machine through the signalling channel.

In an example, the operation that the conference server sends the media data required for the video conference to the cloud desktop terminal through the media channel may include the following actions.

The conference server may acquire a media address corresponding to the cloud desktop terminal.

The conference server may send the media data to the cloud desktop terminal corresponding to the media address.

Another embodiment of the disclosure further provides an apparatus for implementing a video conference, which may be applied to a cloud desktop terminal and include a first establishing module, a receiving module and an executing module.

The first establishing module is configured to establish a media channel with a conference server.

The receiving module is configured to receive media data sent by the conference server through the media channel.

The executing module is configured to execute the video conference according to the media data.

In an example, the apparatus may further include a controlling module. The receiving module may further be configured to receive control information sent by the cloud desktop virtual machine via a pre-established link, and the controlling module may be configured to control presentation of the video conference according to the controlling information.

In an example, the receiving module may further be configured to receive the control information via the link established by a terminal proxy module and a cloud end proxy module, wherein the terminal proxy module may be arranged in the cloud desktop terminal and the cloud end proxy module may be arranged in the cloud desktop virtual machine.

In an example, the first establishing module may include a receiving unit and an establishing unit.

The receiving unit may be configured to receive a conference server address from a cloud desktop virtual machine.

The establishing unit may be configured to establish a media channel with the conference server according to the conference server address.

Another embodiment of the disclosure provides an apparatus for implementing a video conference, which may be applied to a conference server and include a second establishing module and a sending module. The second establishing module is configured to establish a media channel with a cloud desktop terminal, and the sending module is configured to send media data required for the video conference to the cloud desktop terminal through the media channel.

In an example, the apparatus of claim may further include a third establishing module. The third establishing module may be configured to establish a signalling channel with a cloud desktop virtual machine, and the sending module may be configured to send control information for controlling the video conference to the cloud desktop virtual machine through the signalling channel.

In an example, the sending module may include an acquiring unit and a sending unit. The acquiring unit may be configured to acquire a media address corresponding to the cloud desktop terminal, and the sending unit may be configured to send the media data to the cloud desktop terminal corresponding to the media address.

An embodiment of the disclosure further provides a computer storage medium, which may store executable instructions for performing the method for implementing the video conference as described in the above embodiments.

In the embodiments of the disclosure, media data required for a video conference is transmitted through a media channel established between a cloud desktop terminal and a conference server. The above technical solution solves the problem in the related art that execution of the video conference in cloud desktop environment brings enormous pressures on the network due to interaction of a large amount of media data between the cloud desktop terminal and the cloud desktop virtual machine, such that reliance on network conditions and load on the cloud desktop virtual machine are significantly reduced.

### BRIEF DESCRIPTION OF DRAWINGS

The accompanying drawings herein are intended to provide a further understanding of the disclosure and constitute a part of the present disclosure. The schematic embodiments of the disclosure and the descriptions thereof are only intended to illustrate the disclosure and should not be construed as limitations to the present disclosure.
FIG. 1 is a first flowchart of a method for implementing a video conference according to an embodiment of the disclosure.
FIG. 2 is a second flowchart of a method for implementing a video conference according to an embodiment of the disclosure.
FIG. 3 is a first structural block diagram of an apparatus for implementing a video conference according to an embodiment of the disclosure.
FIG. 4 is a second structural block diagram of an apparatus for implementing a video conference according to an embodiment of the disclosure.
FIG. 5 is a third structural block diagram of an apparatus for implementing a video conference according to an embodiment of the disclosure.
FIG. 6 is a fourth structural block diagram of an apparatus for implementing a video conference according to an embodiment of the disclosure.
FIG. 7 is a fifth structural block diagram of an apparatus for implementing a video conference according to an embodiment of the disclosure.
FIG. 8 is a sixth structural block diagram of an apparatus for implementing a video conference according to an embodiment of the disclosure.
FIG. 9 is a seventh structural block diagram of an apparatus for implementing a video conference according to an embodiment of the disclosure.
FIG. 10 is a first structural block diagram of a system for implementing a video conference according to an embodiment of the disclosure.
FIG. 11 is a second structural block diagram of a system for implementing a video conference according to an embodiment of the disclosure.
FIG. 12 is a third structural block diagram of a system for implementing a video conference according to an embodiment of the disclosure.
FIG. 13 is a fourth structural block diagram of a system for implementing a video conference according to an embodiment of the disclosure.
FIG. 14 is a structural block diagram of a system for implementing a video conference according to a preferred embodiment of the disclosure.
FIG. 15 is a schematic diagram of forwarding control information according to a preferred embodiment of the disclosure.
FIG. 16 is a flowchart of establishing a link according to a preferred embodiment of the disclosure.
FIG. 17 is a flowchart of interaction among media proxies according to a preferred embodiment of the disclosure.

### DETAILED DESCRIPTION

The disclosure will be described below in combination with embodiments with reference to accompanying drawings. It is to be noted that embodiments in the present disclosure and features thereof may be combined in case of no conflict.

It is to be noted that terms "first", "second" and the like in the description, claims and the above accompanying drawings of the disclosure are used for distinguishing similar elements and not necessarily for describing a particular order or chronological order.

The operations illustrated in flowcharts of the drawings may be implemented in a computer system such as a set of computer executable instructions. Moreover, although a logical order is illustrated in the flowcharts, the operations illustrated or described may be performed in a different order than the ones described herein in some cases.

### Embodiment 1

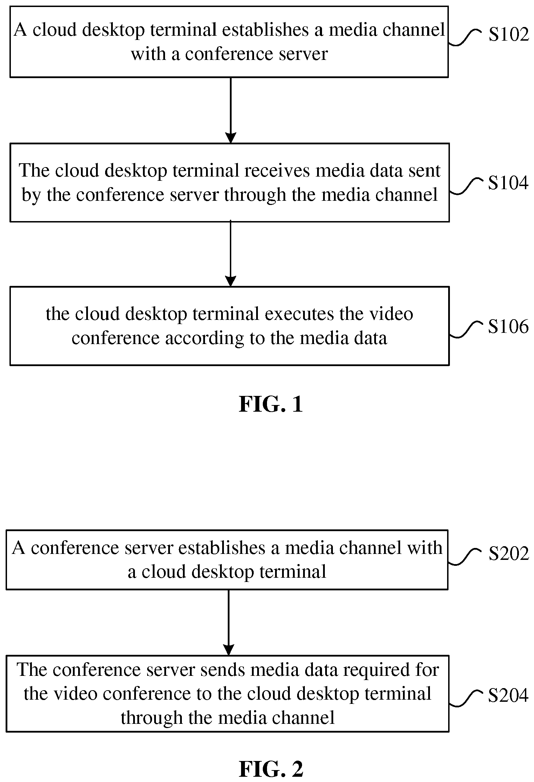

An embodiment of the disclosure provides a method for implementing a video conference. FIG. 1 is a first flowchart of the method for implementing the video conference according to an embodiment of the disclosure. As illustrated in FIG. 1, the method includes the following operations.

In S102, a cloud desktop terminal establishes a media channel with a conference server.

In S104, the cloud desktop terminal receives media data sent by the conference server through the media channel.

In S106, the cloud desktop terminal executes the video conference according to the media data.

By means of the operations described above, media data required for a video conference is transmitted through a media channel established between a cloud desktop terminal and a conference server without forwarding the media data via a cloud virtue machine. The above technical solution solves the problem in the related art that execution of the video conference in cloud desktop environment brings enormous pressures on the network due to interaction of a large amount of media data between the cloud desktop terminal and a cloud desktop virtual machine. Therefore, reliance on network conditions and load on the cloud desktop virtual machine are significantly reduced.

According to the technical solution of the embodiments of the disclosure, a large amount of media data is transmitted between a cloud desktop terminal and a conference server. As for signalling data (for example, control information for representation of the video conference) required during execution of the video conference, in an alternative embodiment, transmission of signalling data is implemented through the following solution. A cloud desktop terminal receives control information sent by a cloud desktop virtual machine via a pre-established link, and the cloud desktop terminal controls presentation of the video conference according to the control information. Specifically, the control of the video conference may be control of related parameters in a display interface for the video conference.

In an alternative embodiment, the operation that the cloud desktop terminal receives the control information sent by the cloud desktop virtual machine via the pre-established link may be implemented by using the following technical solution.

The cloud desktop terminal receives control information via a link established by a cloud end proxy module arranged in the cloud desktop virtual machine and a terminal proxy module arranged in the cloud desktop terminal. That is to say, the link may be established by means of the terminal proxy module and the cloud end proxy module as described above, so that the cloud desktop terminal receives the control information via this link.

In an optional example, the operation in S102 may be that the terminal proxy module in the cloud desktop terminal establishes a media channel with the conference server, and thus the operation in S104 may be that the terminal proxy module receives the media data sent by the conference server through the media channel.

In an embodiment of the disclosure, the cloud desktop terminal establishes the link with the cloud desktop virtual machine by using one of the following manners: the cloud desktop terminal receives notification information from the cloud desktop virtual machine upon activating a video conference application of the cloud desktop virtual machine; or, the cloud desktop terminal reads a pre-stored Internet IP address of the cloud desktop virtual machine under triggering of the notification information and initiates a link request to a cloud desktop virtual machine corresponding to the IP address.

Further, in an embodiment of the disclosure, the cloud desktop terminal initiates the link request to the cloud desktop virtual machine corresponding to the IP address through a terminal proxy module arranged on the cloud desktop terminal.

There are many implementations for the operation in S102. In an alternative example of the disclosure, the embodiment of the disclosure may be implemented by using the following technical solution. The cloud desktop terminal receives a conference server address from the cloud desktop virtual machine, and the cloud desktop terminal establishes a media channel with the conference server according to the conference server address. Specifically, the conference server address may be received by the terminal proxy module in the cloud desktop terminal.

It is to be illustrated that in embodiments of the disclosure, a cloud desktop terminal may directly establish a media channel with a conference server, and thus the cloud desktop terminal receives media data sent by the conference server through the media channel. The cloud desktop terminal may further receive control information from a cloud virtual desktop machine, and thus controls presentation of the video conference according to the control information. With the above technical solution, presentation of the video conference may be controlled via the cloud desktop terminal, which avoids interaction of a large amount of media data between the cloud desktop terminal and the cloud desktop virtual machine. In a specific implementation, of course, a terminal proxy module may be arranged in the cloud desktop terminal and a cloud end proxy module may be arranged in the cloud desktop virtual machine to implement the above functions. Those skilled in the art should understand that presentation of a video conference may be controlled through the cloud desktop terminal as long as a media display function is sunk from a virtual machine to a terminal.

### Embodiment 2

The above embodiments are described mainly from the perspective of the cloud desktop terminal. In order to fully understand the above technical solutions, the disclosure further provides a technical solution described from the perspective of a conference server. The embodiment of the disclosure provides a method for implementing the video conference. FIG. 2 is a second flowchart of a method for implementing the video conference according to an embodiment of the disclosure. As illustrated in FIG. 2, the method includes the following operations.

In S202, a conference server establishes a media channel with a cloud desktop terminal.

In S204, the conference server sends media data required for the video conference to the cloud desktop terminal through the media channel.

By means of the operations described above, after a conference server establishes a media channel with a cloud desktop terminal, the conference server sends the media data required for the video conference to the cloud desktop terminal without forwarding the media data via a cloud desktop virtual machine. The above technical solution solves the problem in the related art that execution of the video conference in cloud desktop environment brings enormous pressures on the network due to interaction of a large amount of media data between the cloud desktop terminal and a cloud desktop virtual machine. Therefore, reliance on network conditions and load on the cloud desktop virtual machine are significantly reduced.

It is to be illustrated that the media data in S204 needs to be negotiated and determined by a controlling module for a video conference software in the cloud desktop virtual machine and the conference server firstly, and then the conference server directly sends correct media data to the cloud desktop terminal upon negotiation and determination.

The conference server establishes a media channel with the cloud desktop terminal to transmit the media data, and establishes a signalling channel with the cloud desktop virtual machine to transmit signalling data required during video conference transmission. Specifically, the conference server establishes the signalling channel with the cloud desktop virtual machine (specifically, the conference server may establish the signalling channel with a cloud end proxy module in the cloud desktop virtual machine). The conference server sends control information required for controlling the video conference to the cloud desktop virtual machine through the signalling channel. Then the cloud desktop virtual machine sends the received control information to the cloud desktop terminal via a pre-established link, and thus the cloud desktop terminal may control presentation of the video conference.

In an optional example, the conference server needs to acquire a media address corresponding to the cloud desktop terminal, and different cloud desktop terminals correspond to different media addresses. The conference server sends the media data to the cloud desktop terminal corresponding to the media address.

The above technical solutions of the disclosure provide a newly-arranged procedure for conference control and establishment of the media channel, such that reliance of the video conference system on the network conditions is significantly reduced during the usage by the loud desktop user, while a large amount of operations that conventionally concentrate on a cloud servers are sunk into a terminal, such that load on the cloud desktop virtual machine is greatly reduced.

Meanwhile, the technical solution of the embodiments of the disclosure sufficiently overcomes the problem in the prior art of high occupied bandwidth and large load at cloud end caused by multi-person video conference under the cloud desktop environment. Separation of control and presentation are implemented by reorganizing, dividing and stripping video conference system modules, which achieves an effect of reducing load on the network and server, and the scheme of media transmission and representation between terminals is optimized, so that load on each terminal is balanced. Additionally, by providing a client in a cloud desktop terminal, the technical solution of the embodiment of the present disclosure can be directly implemented by any terminal in which the client is installed, thereby eliminating redundant works of additional deployment and configuration.

Actually, from the technical solutions embodied in the above embodiments 1 and 2, it can be seen that in the embodiments of the disclosure, control information for controlling the video conference (for example, closing a current video conference, increasing or decreasing the number of participants in the current video conference) is mainly transmitted between the conference server and the cloud desktop virtual machine, while control information for displaying the video conference (for example, controlling display parameters of a display interface for the video conference) is mainly transmitted between the cloud desktop virtual machine and the cloud desktop terminal.

Through descriptions of the above embodiments, those skilled in the art may clearly understand that the method of the abovementioned embodiment may be implemented by virtue of software and necessary general hardware platform, may also be implemented by hardware, and the former may be a more preferred implementation in most circumstances. Based on such understanding, the technical solutions of the disclosure substantially or parts making contributions to the conventional art may be embodied in form of software product. The computer software product is stored in a storage medium (for example, Read-Only Memory (ROM)/ Random-Access Memory (RAM), a disk, an optical disk), and includes a plurality of instructions configured to enable a terminal device (which may be a cellphone, a computer, a server, network equipment or the like) to execute the method in each embodiment of the disclosure.

### Embodiment 3

An embodiment of the disclosure further provides an apparatus for implementing a video conference, applied to a cloud desktop terminal and used for implementing the above embodiments and preferred implementations. The details that have already been described will not be elaborated here. As used below, the term "module" may implement combinations of hardware and/or software with predetermined functions. Although the apparatus described in the following embodiments may be preferably implemented in software, implementations in hardware and in the combinations of software and hardware are also possible and contemplated.

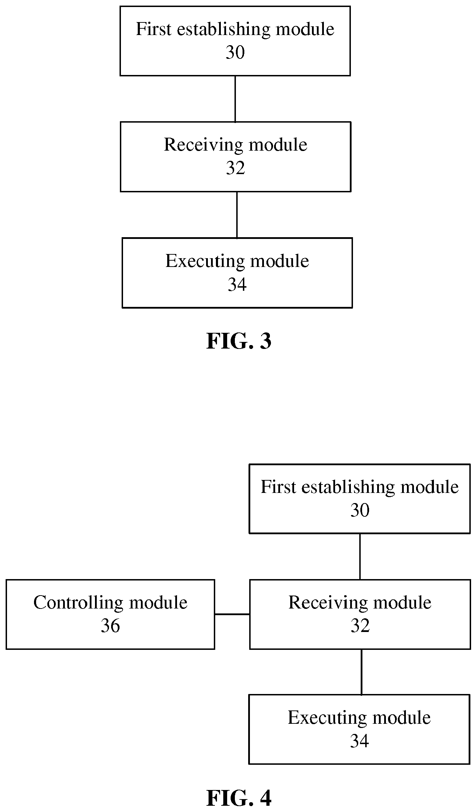

FIG. 3 is a first block diagram of an apparatus for implementing a video conference according to an embodiment of the disclosure. As illustrated in FIG. 3, the apparatus includes a first establishing module 30, a receiving module 32 and an executing module 34.

The first establishing module 30 is configured to establish a media channel with a conference server.

The receiving module 32 is configured to receive media data sent by the conference server through the media channel.

The executing module 34 is configured to execute the video conference according to the media data.

By comprehensive effects of the above modules, media data required for a video conference is transmitted through a media channel established between a cloud desktop terminal and a conference server, without forwarding the media data via a cloud virtue machine. The above technical solution solves the problem in the related art that execution of the video conference in cloud desktop environment brings enormous pressures on the network due to interaction of a large amount of media data between the cloud desktop terminal and a cloud desktop virtual machine. Therefore, reliance on network conditions and load on the cloud desktop virtual machine are significantly reduced.

FIG. 4 is a second block diagram of an apparatus for implementing a video conference according to an embodiment of the disclosure. As illustrated in FIG. 4, the apparatus further includes a controlling module 36 connected with the receiving module 32. In an embodiment of the disclosure, the receiving module 32 may further be configured to receive control information sent by the cloud desktop virtual machine via a pre-established link, and the controlling module 36 may be configured to control presentation of the video conference according to the control information.

In an optional example, the receiving module 32 may further be configured to receive control information via a link established by a cloud end proxy module and a terminal proxy module, wherein the terminal proxy module is provided in the cloud desktop terminal and the cloud end proxy module is provided in the cloud desktop virtual machine.

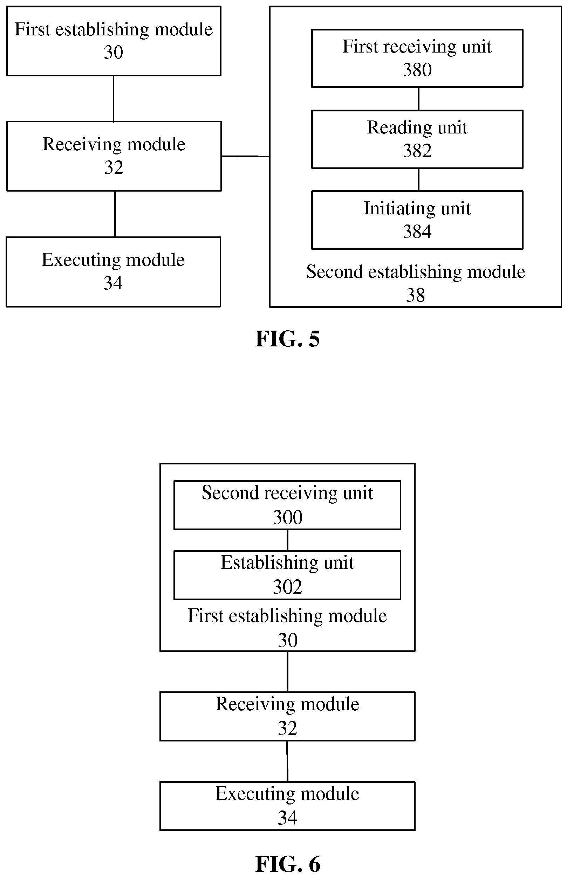

FIG. 5 is a third block diagram of an apparatus for implementing a video conference according to an embodiment of the disclosure. As illustrated in FIG. 5, the apparatus further includes a second establishing module 38 configured to establish a link with a cloud desktop virtual machine in at least one of the following manners. In an optional example, as illustrated in FIG. 5, the second establishing module 38 may mainly include a first receiving unit 380, a reading unit 382 and an initiating unit 384.

The first receiving unit 380 may be configured to receive notification information from the cloud desktop virtual machine upon activating a video conference application of the cloud desktop virtual machine.

The reading unit 382 may be configured to read a pre-stored Internet IP address of the cloud desktop virtual machine under triggering of the notification information.

The initiating unit 384 may be configured to initiate a link request to a cloud desktop virtual machine corresponding to the IP address.

Further, the initiating unit 384 may further be configured to initiate the link request to the cloud desktop virtual machine corresponding to the IP address through a terminal proxy module in the cloud desktop terminal.

FIG. 6 is a fourth block diagram of an apparatus for implementing a video conference according to an embodiment of the disclosure. As illustrated in FIG. 6, the first establishing module 30 may include a second receiving unit 300 and an establishing unit 302.

The second receiving unit 300 may be configured to receive a conference server address from a cloud desktop virtual machine.

The establishing unit 302 may be configured to establish a media channel with the conference server according to the conference server address.

### Embodiment 4

An embodiment of the disclosure further provides an apparatus for implementing a video conference, which is applied to a conference server and used for implementing the above embodiments and preferred implementations. The details that have already been described will not be elaborated here. As used below, the term "module" may implement combinations of hardware and/or software with predetermined functions. Although the apparatus described in the following embodiments may be preferably implemented in software, implementations in hardware, and in the combinations of software and hardware are also possible and contemplated.

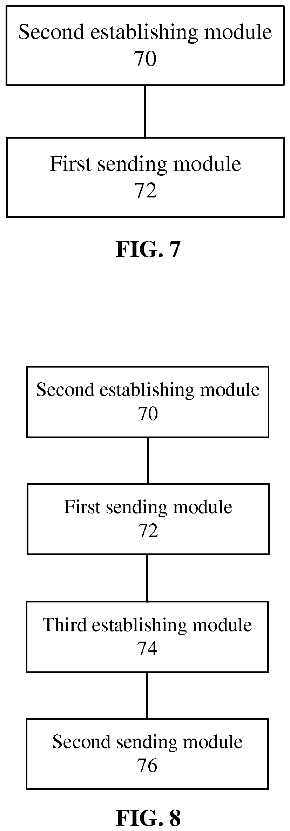

FIG. 7 is a fifth block diagram of an apparatus for implementing a video conference according to an embodiment of the disclosure. As illustrated in FIG. 7, the apparatus includes a second establishing module 70 and a first sending module 72.

The second establishing module 70 is configured to establish a media channel with a cloud desktop terminal.

The first sending module 72 is configured to send media data required for the video conference to the cloud desktop terminal through the media channel.

By means of the effects of the above modules, after a conference server establishes a media channel with a cloud desktop terminal, the conference server sends the media data required for the video conference to the cloud desktop terminal without forwarding the media data via a cloud virtue machine. The above technical solution solves the problem in the related art that execution of the video conference in cloud desktop environment brings enormous pressures on the network due to interaction of a large amount of media data between the cloud desktop terminal and a cloud desktop virtual machine. Therefore, reliance on network conditions and load on the cloud desktop virtual machine are significantly reduced.

FIG. 8 is a sixth block diagram of an apparatus for implementing a video conference according to an embodiment of the disclosure. As illustrated in FIG. 8, the apparatus includes a third establishing module 74 and a second sending module 76.

The third establishing module 74 may be configured to establish a signalling channel with a cloud desktop virtual machine.

The second sending module 76 may be configured to send control information for controlling the video conference to the cloud desktop virtual machine through the signalling channel.

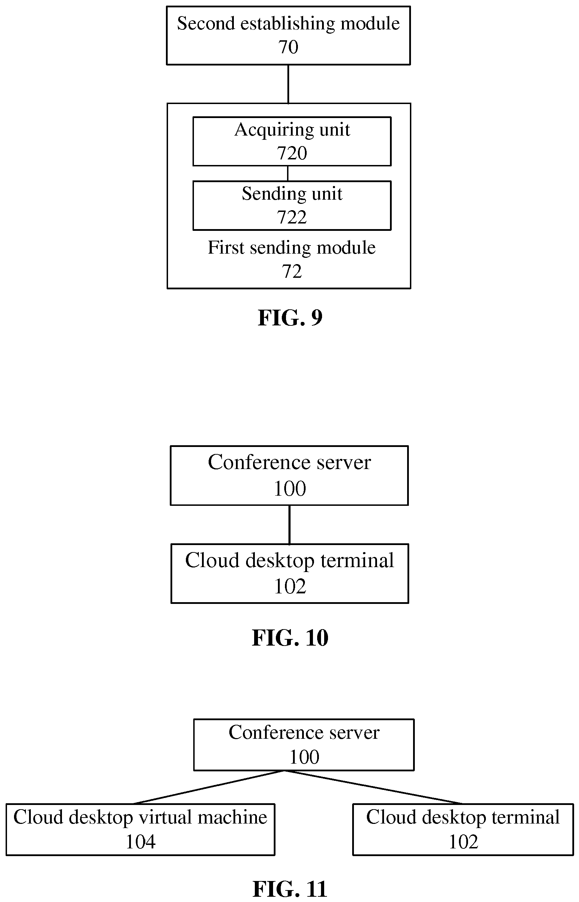

FIG. 9 is a seventh block diagram of an apparatus for implementing a video conference according to an embodiment of the disclosure. As illustrated in FIG. 9, the first sending module 72 includes an acquiring unit 720 and a sending unit 722.

The acquiring unit 720 may be configured to acquire a media address corresponding to the cloud desktop terminal.

The sending unit 722 may be configured to send the media data to the cloud desktop terminal corresponding to the media address.

### Embodiment 5

An embodiment of the disclosure further provides a system for implementing a video conference. FIG. 10 is a structural block diagram of a system for implementing a video conference according to an embodiment of the disclosure. As illustrated in FIG. 10, the system includes a conference server 100 and a cloud desktop terminal 102, wherein the conference server 100 is configured to send media data though a media channel established with the cloud desktop terminal, and the cloud desktop terminal 102 is configured to execute the video conference according to the media data.

Through interactions between the conference server and the cloud desktop terminal described above, after a conference server establishes a media channel with a cloud desktop terminal, the conference server sends the media data required for the video conference to the cloud desktop terminal without forwarding the media data via a cloud virtue machine. The above technical solution solves the problem in the related art that execution of the video conference in cloud desktop environment brings enormous pressures on the network due to interaction of a large amount of media data between the cloud desktop terminal and a cloud desktop virtual machine. Therefore, reliance on network conditions and load on the cloud desktop virtual machine are significantly reduced.

FIG. 11 is another structural block diagram of a system for implementing a video conference according to an embodiment of the disclosure. As illustrated in FIG. 11, the system further includes a cloud desktop virtual machine 104. The cloud desktop virtual machine 104 may be configured to establish a signalling channel with the conference server and receive the control information for controlling the video conference sent by the conference server through the signalling channel.

It is to be illustrated that each module described above may be implemented in software or hardware. As for the hardware implementation, each module may be implemented in the following manners, but not limited to these manners: the above modules are all located in the same processor; or the above modules are respectively located in different processors in any combination.

An embodiment of the disclosure further provides a cloud desktop terminal, which includes a first processor and a first memory configured to store executable instructions by the first processor.

The first processor is configured to establish a media channel with a conference server, receive media data sent by the conference server through the media channel and executes the video conference according to the media data.

An embodiment of the disclosure further provides a conference server, which includes a second processor and a second memory configured to store executable instructions by the second processor.

The second processor is configured to establish a media channel with a cloud desktop terminal, and send media data required for the video conference to the cloud desktop terminal through the media channel.

### Embodiment 6

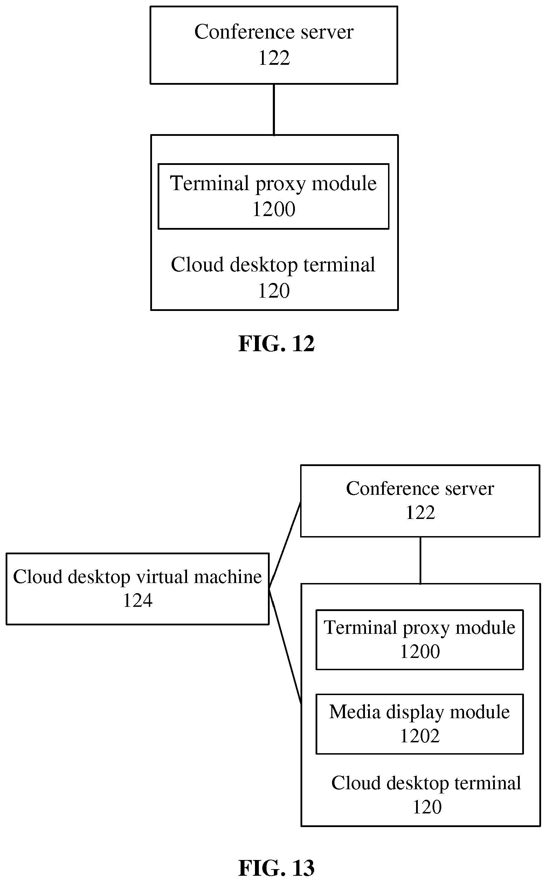

An embodiment of the disclosure further provides a system for implementing a video conference. FIG. 12 is a third block diagram of a system for implementing a video conference according to an embodiment of the disclosure. As illustrated in FIG. 12, the system includes a cloud desktop terminal 120 and a conference server 122.

The cloud desktop terminal 120 is configured with a terminal proxy module 1200, and the terminal proxy module 1200 is configured to establish a media channel with the conference server. The conference server 122 is connected with the cloud desktop terminal 120 and configured to send media data required for the video conference to the terminal proxy module 1200 through the media channel.

Through interaction between the conference server 122 and the terminal proxy module 1200 described above, media data required for a video conference is transmitted through a media channel established between a terminal proxy module in a cloud desktop terminal and a conference server, without forwarding the media data via a cloud virtue machine. The above technical solution solves the problem in the related art that execution of the video conference in cloud desktop environment brings enormous pressures on the network, due to interaction of a large amount of media data between the cloud desktop terminal and the cloud desktop virtual machine. Therefore, reliance on network conditions and load on the cloud desktop virtual machine are significantly reduced.

FIG. 13 is a fourth block diagram of a system for implementing a video conference according to an embodiment of the disclosure. As illustrated in FIG. 13, the system further includes a cloud desktop virtual machine 124, and the cloud desktop terminal 120 is provided with a media display module 1202.

The cloud desktop virtual machine 124 is connected with the conference server 122 and the cloud desktop terminal 120. The cloud desktop virtual machine 124 may be configured to receive control information from the conference server 122 and send the control information to the media display module 1202 via a pre-established link. The control information is configured for controlling presentation of the video conference, and the link is pre-established by a cloud end proxy module in the cloud desktop virtual machine and the terminal proxy module.

In an optional example, as illustrated in FIG. 13, the cloud desktop virtual machine 124 may be configured with the cloud end proxy module 1240 and configured to forward the control information to the media display module 1202.

In an optional example, the cloud desktop virtual machine 125 may further be configured to establish a signalling channel with the conference server 122,and receive the control information for controlling the video conference from the conference server through the signalling channel.

An embodiment of the disclosure further provides a cloud desktop terminal, which includes a terminal proxy module.

The terminal proxy module is configured to establish a media channel with a conference server and receive media data required for the video conference from the conference server through the media channel.

In an optional example, the cloud desktop module further includes a media display module configured to receive, via a pre-established link, control information sent by the conference server and forwarded by the cloud desktop virtual machine. The link is pre-established by a cloud end proxy module in the cloud desktop virtual machine and the terminal proxy module.

For better understanding the above implementations for a video conference, the above technical solutions will be described below in combination with the preferred embodiments but should not be constructed as limitations to the embodiments of the disclosure.

### Preferred Embodiment 1

A preferred embodiment of the disclosure provides a solution for a video conference applied in a cloud desktop system and suitable for various terminals, which may achieve the technical effects of reducing occupation of network bandwidth and reducing load on a cloud server.

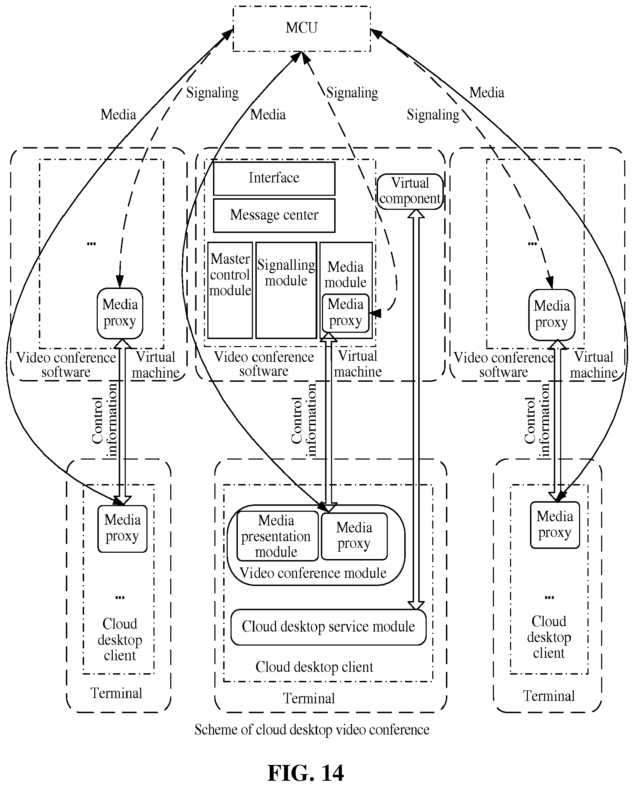

The preferred embodiment of the disclosure combines a cloud desktop with a video conference system. FIG. 14 is a block diagram of a system for implementing the video conference according to a preferred embodiment. As illustrated in FIG. 14, an preferred embodiment of the disclosure mainly relates to a virtual-machine component, a master control module, a media proxy (located in a cloud desktop virtual machine), a cloud desktop client, a media proxy (located in a terminal), a media display module and the like in a cloud desktop system.

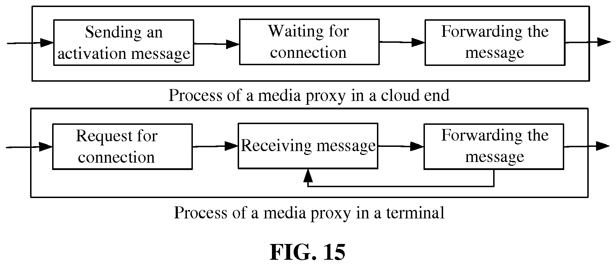

The cloud desktop client, the media proxy located in the terminal and the media display module operate at the terminal. The cloud desktop client is responsible for delivering parameters required for establishing a link to the media proxy in the terminal, and the media proxy in the terminal is used for establishing the link with the media proxy in the cloud desktop, receiving control information from the media proxy. The virtual-machine component, the media proxy located in the cloud end, an interface, a message center, the master control module, a signalling module and a media module (on which is configured with the above media proxy) operate at a virtual machine (equivalent to the cloud desktop virtual machine in the above embodiments). The virtual components functions as a client to deliver the parameters during establishment of the link, and to notify the media proxy in the virtual machine when the link is disconnected. The media proxy in the virtual machine mainly receives an control message from a conference control module (not shown in FIG. 14, but it may be understood to include the interface, the message center, the master control module, the signalling module and the media module in FIG. 14), and delivers the control message to the media proxy in the terminal. Meanwhile, upon detecting that the link with the media proxy in the terminal is disconnected, the media proxy in the virtual machine initiates a reconnection request through the virtual component. The conference control module is responsible for processing conference-related control information such as initiation of conferences, management of the participants and the like. The media proxy modules in the virtual machine and the terminal are mainly responsible for forwarding the controlling messages without any active operation logics, specific situations of which are illustrated in FIG. 15 and will not be elaborated here.

Further, MCU in FIG. 14 is a multi-point control unit, which may be understood as a conference server. The media proxy module in the virtual machine and the media proxy module in the terminal are responsible for delivering the control message. The control message is a window message including, such as maximizing, minimizing, moving, dragging and pausing of the window. The control message further includes media-related parameters from the conference server, such as MCU address, port numbers and reception format of the media. Representation module is responsible for collecting and coding a local video of the terminal, receiving media from the MCU, decoding and displaying the received media. A user may also select a list of participants to be displayed by means of the master control module in the virtual machine.

### Preferred Embodiment 2

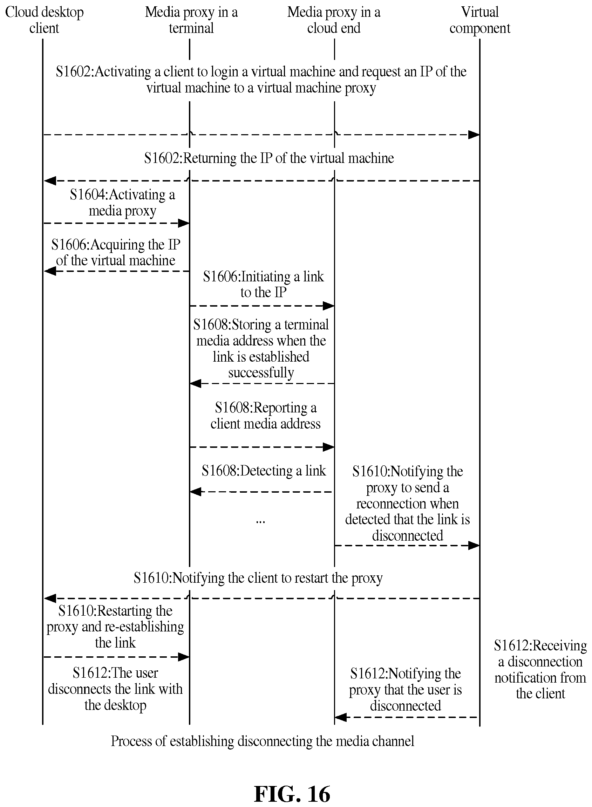

FIG. 16 is a flowchart of establishing a link according to a preferred embodiment of the disclosure, which includes the following operations as illustrated in FIG. 16.

In S1602, a user activates a client to login a cloud desktop, and the client acquires IP information of a virtual machine during interaction with a virtual-machine component and stores the acquired IP information of the virtual machine into a locally specified directory.

In S1604, the user activates a video conference application in the virtual machine, and the video conference application notifies the client to activate a terminal proxy and a presentation module through the virtual-machine component.

In S1606, the terminal proxy, upon activation, reads an IP of the virtual machine from the specified directory and initiates a Socket link to a port specified by the IP.

In S1608, a cloud end proxy keeps monitoring upon activation. Once receiving a link request, the cloud end proxy establishes a link, acquires an address of peer end as a media address to notify a master control module, and simultaneously monitors a connection status of the link.

In S1610, when detected that the link is abnormal, the cloud end proxy notifies the client to restart the terminal media proxy through the virtual-machine component, and returns to the process of establishing the link in S1606.

In S1612, the user logs out the cloud desktop and the client program exits. When the virtual machine component receives a client disconnection message sent by an underlying server, the virtual machine component notifies the cloud end proxy to disconnect the link and exit the link monitoring.

### Preferred Embodiment 3

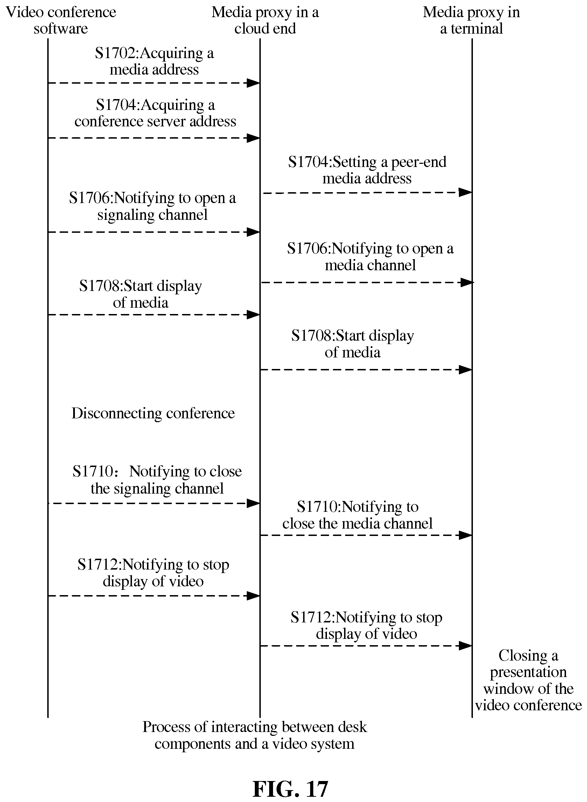

FIG. 17 is a flowchart of interaction between media proxies according to a preferred embodiment of the disclosure, which includes the following operations as illustrated in FIG. 17.

In S1702, a media proxy in a cloud end acquires a media address of a current user, so as to notify a conference server to perform a procedure of media reception and transmission to a cloud desktop terminal corresponding to the media address.

In S1704, a conference control module notifies a conference server address to a cloud-end media proxy (i.e., a media proxy in the cloud end), and then the cloud-end media proxy delivers the conference server address to a terminal media proxy (i.e., a media proxy in the terminal).

In S1706, the cloud-end proxy establishes a signalling channel with the conference server according to acquired information, and the terminal proxy establishes a media channel correspondingly.

In S1708, after the signalling channel and the media channel are established, the cloud-end proxy sends a control message to notify the terminal proxy to start presenting the video conference.

In S1710, a conference moderator closes the video conference through a control interface for the video conference. The cloud-end proxy closes the signalling channel with the conference server upon receiving a close message, and simultaneously notifies the terminal proxy to close the media channel and stop to receive the conference information.

In S1712, the master control module again notifies the terminal presentation module to close a conference window through the cloud-end proxy and stop to display content of the conference.

### Preferred Embodiment 4

A preferred embodiment 4 of the disclosure describes a manner for conference creation, which includes a cloud desktop client, a media proxy in a terminal, a media presentation module, a virtual-machine component, a media proxy in a virtual machine, a conference server (MCU) and the like.
Firstly, a user A logins the cloud desktop through the cloud desktop client, activates and logins a video conference application in the cloud desktop, and selects a conference server to complete authentication.
Secondly, if the authentication is passed, the video conference application activates the media proxy in the terminal though the virtual-machine component and the cloud desktop client to request the media proxy in the cloud end for establishing a link.
Thirdly, a conference moderator A initiates a video conference to a user B and a user C by operating a conference management interface and sets conference parameters.
Fourthly, after the users accepts the invitation to the video conference, terminals B and C establish media channels with the conference server respectively for sending local audio and video data and receiving media data of other participants from the server.
Fifthly, the cloud-end proxy of each user sends control message to notify each terminal proxy to start displaying pictures of the video conference, and simultaneously the conference server uniformly processes the media data from each terminal and then sends the processed media data to each terminal presentation module through each media channel.
Sixthly, the user B sets to view only pictures of the conference moderator in the desktop, the setting is notified by the cloud end proxy to the conference server and only the pictures of the conference moderator are sent for a server of the participant after authentication is passed.

### Preferred Embodiment 5

A preferred embodiment of the disclosure describes a process in which a user R requests to join a conference during the conference. The modules involved in this process include a media proxy in a terminal, a presentation module, a media module in a cloud end, a master control module and a conference server.
Firstly, a user R activates and logins a video conference application in a desktop, and then a link is established between a local terminal and media proxies.
Secondly, the user R initiates a request for joining the conference to the conference server.
Thirdly, according to a conference strategy, the conference server forwards the request to a moderator for determining.
Fourthly, the moderator accepts the request and the user R succeeds to join in the conference.
Fifthly, the user R clicks on a maximum button in a conference window, and the virtual machine generates a control message, and the control message is notified to a media presentation module through the media proxy in the cloud end and the media proxy in the terminal to maximize the presentation.

### Preferred Embodiment 6

In a preferred embodiment of the disclosure, a user may exit a conference in the following manners, such as managing an interface, closing a conference application, disconnecting a cloud desktop and the like. The preferred embodiment describes a process that a user C actively exits the conference by managing an interface, which involves a media proxy in a terminal, a media presentation module, a media module in a cloud end, a master control module and a conference server.
Firstly, the user C operates the conference interface to exit the conference. Secondly, the master control module in the desktop notifies an exiting message to the media proxy in the cloud end.
Thirdly, upon receiving the exiting message, the media proxy in the cloud end notifies the exiting message to the media proxy in the terminal while sending a request for disconnecting a signalling channel to the conference server.
Fourthly, the media proxy in the terminal sends a disconnection message of a media channel to the conference server.
Fifthly, after receiving the exiting message of the user and the disconnection message, the conference server clears information of the user C from current conference session, stops mixing and forwarding audio and video information of the user C, and disconnects the signaling channel and the media channel with the user C.
Sixthly, the terminal C stops presenting and playing content relevant to the conference.

### Preferred Embodiment 7

A preferred embodiment of the disclosure describes a process that a moderator terminates a conference at the end of the conference, in which the involved modules include a media proxy in a terminal, a media presentation module, a media proxy in a cloud end, a master control module and a conference server.
Firstly, when the conference ends, a moderator operates an interface to terminate the conference.
Secondly, upon receiving the termination request, the conference server stops processing and forwarding audio and video stream from each user and notifies each participant that the conference is terminated.
Thirdly, after the moderator receives a termination confirmation from the server, the moderator exits the control interface and requests for disconnecting signaling and media channels.
Fourthly, a general participant receives a termination message of the conference and initiates a request for disconnecting channels to the server.
Fifthly, the server disconnects the signalling channel and the media channel with each participant and clears information of the conference.
Sixthly, each participant stops playing audio and video of the conference.

The above technical solutions of the embodiments of the disclosure can achieve the following technical effects. 1) Frequent delivery of media data between a terminal and a cloud desktop is eliminated, and reliance of this application on network conditions is significantly reduced. 2) By virtue of sinking processing of the media data, such as coding and decoding into the terminal, pressure on a cloud server is effectively reduced especially in a case that a large number of participants or multiple users are using the cloud server at the same time. 3) A cloud desktop client is deployed in the cloud desktop terminal without additional implementation. As long as such a client is installed, a user can access the client anytime and anywhere through terminal devices such as a PC, a thin terminal, a mobile phone, a tablet and the like.

An embodiment of the disclosure further provides a storage medium. In an optional example of the embodiment, the above storage medium may be configured to store a program code for executing the following operations.

In S1, a media channel is established with a conference server.

In S2, media data sent by the conference server through the media channel is received.

In S3, the video conference is executed according to the media data.

An embodiment of the disclosure further provides a storage medium. In an optional example of the embodiment, the above storage medium may be configured to store a program code for executing the following operations.

In S1, a media channel is established with a cloud desktop terminal.

In S2, media data required for the video conference is sent to the cloud desktop terminal through the media channel.

In an optional example of the embodiment, the abovementioned storage medium may include, but not limited to various media capable of storing program codes such as a U-disk, a ROM, a RAM, a magnetic disk or an optical disk.

In an optional example, specific examples of the embodiment are described with reference to the above embodiments and examples in alternative implementation modes, which will not be elaborated herein.

The sequence numbers of embodiments of the present disclosure are only intended for description but not to represent merits of the embodiments.

In abovementioned embodiments of the disclosure, the descriptions for the various embodiments are different, and the parts in a certain embodiment that are not described in detail may be referred to relevant description of other embodiments.

In some embodiments provided by the application, it should be understood that the disclosed technical content may be implemented in another manner. The device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the units or the modules, and may be electrical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each function unit in each embodiment of the disclosure may be integrated into a processing unit, each unit may also exist independently, and two or more than two units may also be integrated into a unit. The unit integrated above may be implemented in form of hardware, and also be implemented in form of software function unit.

When being realized in form of the software function unit and sold or used as an independent product, the integrated unit may be stored in a computer-readable storage medium. Based on such an understanding, the technical solutions of the disclosure substantially or parts making contributions to the conventional art or all of or part of the technical solutions may be embodied in form of software product, and the computer software product is stored in a storage medium, including a plurality of instructions configured to enable a piece of computer equipment (which may be a personal computer, a server, network equipment or the like) to execute all or part of the steps of the method in each embodiment of the disclosure. The abovementioned storage medium includes various media capable of storing program codes such as a U-disk, a ROM, a RAM, a magnetic disk or an optical disk.

The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

### INDUSTRIAL APPLICABILITY

The abovementioned technical solution provided by embodiments of the disclosure may be applied to a process for implementing a video conference. According to the technical solution, media data required for the video conference is transmitted through a media channel established between a cloud desktop terminal and a conference server, so as to solve the problem in the related art that execution of the video conference in cloud desktop environment brings enormous pressures on the network due to interaction of a large amount of media data between the cloud desktop terminal and a cloud desktop virtual machine. Therefore, reliance on network conditions and load on the cloud desktop virtual machine are significantly reduced.

## Claims

1. A system for implementing a video conference, comprising: a cloud desktop terminal and a conference server, wherein
the cloud desktop terminal is configured with a terminal proxy module, wherein the terminal proxy module is configured to establish a media channel with the conference server; and
the conference server is connected with the cloud desktop terminal and configured to send media data required for the video conference to the terminal proxy module through the established media channel.

2. The system of claim 1, further comprising: a cloud desktop virtual machine, wherein
the cloud desktop terminal is configured with a media display module, and
the cloud desktop virtual machine is connected with the conference server and the cloud desktop terminal, and configured to receive control information from the conference server and send the control information to the media display module via a pre-established link, wherein the control information is configured for controlling presentation of the video conference, and the link is pre-established by a cloud end proxy module in the cloud desktop virtual machine and the terminal proxy module.

3. The system of claim 2, wherein the cloud desktop virtual machine is configured with the cloud end proxy module and configured to forward the control information to the media display module.

4. The system of claim 2, wherein the cloud desktop virtual machine is further configured to establish a signalling channel with the conference server and receive the control information for controlling the video conference from the conference server through the signalling channel.

5. A cloud desktop terminal, comprising:
a terminal proxy module, configured to establish a media channel with a conference server and receive media data required for the video conference from the conference server through the media channel.

6. The cloud desktop terminal of claim 5, further comprising:
a media display module, configured to receive, via a pre-established link, control information sent by the conference server and forwarded by the cloud desktop virtual machine, wherein the link is pre-established by a cloud end proxy module in the cloud desktop virtual machine and the terminal proxy module.

7. A method for implementing a video conference, comprising:
establishing, by a cloud desktop terminal, a media channel with a conference server;
receiving, by the cloud desktop terminal, media data sent by the conference server through the media channel; and
executing, by the cloud desktop terminal, the video conference according to the media data.

8. The method of claim 7, further comprising:
receiving, by the cloud desktop terminal, control information sent by the cloud desktop virtual machine via a pre-established link; and
controlling, by the cloud desktop terminal, presentation of the video conference according to the control information.

9. The method of claim 8, wherein receiving, by the cloud desktop terminal, the control information sent by the cloud desktop virtual machine via the pre-established link comprises:
receiving, by the cloud desktop terminal, the control information via the link established by a terminal proxy module and a cloud end proxy module, wherein the terminal proxy module is arranged in the cloud desktop terminal and the cloud end proxy module is arranged in the cloud desktop virtual machine.

10. The method of claim 8, wherein the cloud desktop terminal establishes the link with the cloud desktop virtual machine in at least one of the following manners:
receiving, by the cloud desktop terminal, notification information from the cloud desktop virtual machine upon activating a video conference application of the cloud desktop virtual machine; or
reading, by the cloud desktop terminal, a pre-stored Internet IP address of the cloud desktop virtual machine under triggering of the notification information and initiating a link request to a cloud desktop virtual machine corresponding to the IP address.

11. The method of claim 10, wherein initiating the link request to the cloud desktop virtual machine corresponding to the IP address comprises:
initiating, by the cloud desktop terminal, the link request to the cloud desktop virtual machine corresponding to the IP address through a terminal proxy module in the cloud desktop terminal.

12. The method of claim 7, wherein establishing, by the cloud desktop terminal, the media channel with the conference server comprises:
receiving, by the cloud desktop terminal, a conference server address from a cloud desktop virtual machine; and
establishing, by the cloud desktop terminal, a media channel with the conference server according to the conference server address.

13. A method for implementing a video conference, comprising:
establishing, by a conference server, a media channel with a cloud desktop terminal; and
sending, by the conference server, media data required for the video conference to the cloud desktop terminal through the media channel.

14. The method of claim 13, further comprising:
establishing, by the conference server, a signalling channel with a cloud desktop virtual machine; and
sending, by the conference server, control information for controlling the video conference to the cloud desktop virtual machine through the signalling channel.

15. The method of claim 14, wherein sending, by the conference server, the media data required for the video conference to the cloud desktop terminal through the media channel comprises:
acquiring, by the conference server, a media address corresponding to the cloud desktop terminal; and
sending, by the conference server, the media data to the cloud desktop terminal corresponding to the media address.

16. An apparatus for implementing a video conference, applied to a cloud desktop terminal and comprising:
a first establishing module, configured to establish a media channel with a conference server;
a receiving module, configured to receive media data sent by the conference server through the media channel; and
an executing module, configured to execute the video conference according to the media data.

17. The apparatus of claim 16, further comprising: a controlling module,
wherein the receiving module is further configured to receive control information sent by a cloud desktop virtual machine via a pre-established link; and
the controlling module is configured to control presentation of the video conference according to the control information.

18. The apparatus of claim 17, wherein the receiving module is further configured to receive the control information via the link established by a terminal proxy module and a cloud end proxy module, wherein the terminal proxy module is arranged in the cloud desktop terminal and the cloud end proxy module is arranged in the cloud desktop virtual machine.

19. The apparatus of claim 16, wherein the first establishing module comprises:
a receiving unit, configured to receive a conference server address from a cloud desktop virtual machine; and
an establishing unit, configured to establish a media channel with the conference server according to the conference server address.

20. An apparatus for implementing a video conference, applied to a conference server and comprising:
a second establishing module, configured to establish a media channel with a cloud desktop terminal; and
a sending module, configured to send media data required for the video conference to the cloud desktop terminal through the media channel.

21. The apparatus of claim 20, further comprising:
a third establishing module, configured to establish a signalling channel with a cloud desktop virtual machine;
wherein the sending module is further configured to send control information for controlling the video conference to the cloud desktop virtual machine through the signalling channel.

22. The apparatus of claim 21, wherein the sending module comprises:
an acquiring unit, configured to acquire a media address corresponding to the cloud desktop terminal; and
a sending unit, configured to send the media data to the cloud desktop terminal corresponding to the media address.
